# EUROPÄISCHE PATENTSCHRIFT

(11) **EP 2 447 194 B1**
(45) Veröffentlichungstag und Bekanntmachung des Hinweises auf die Patenterteilung: **31.07.2013**
(21) Anmeldenummer: 11186679.4
(22) Anmeldetag: 26.10.2011
(51) Int. Cl.: B65G 29/00, B65G 47/84

(54) **Sternradförderer**
Star wheel conveyor
Roue de transport en forme d'étoile

(30) Priorität: 26.10.2010 DE 102010049406
(43) Veröffentlichungstag der Anmeldung: 02.05.2012
(73) Patentinhaber: Krones AG, 93073 Neutraubling (DE)
(72) Erfinder: Zeitler, Felix, 93491 Stamsried (DE)
(74) Vertreter: Bittner, Bernhard

(56) Entgegenhaltungen:
- EP-A2- 2 138 432
- JP-A- 61 211 220
- JP-A- 2007 186 271
- JP-U- 62 074 623
- US-A1- 2007 271 871

## Beschreibung

Die vorliegende Erfindung bezieht sich auf eine Vorrichtung zum Transportieren von Behältnissen. Aus dem Stand der Technik sind Behältnisbehandlungsanlagen bekannt, bei denen beispielsweise in Streckblasmaschinen Kunststoffbehältnisse erzeugt werden, diese anschließend abgefüllt, verschlossen und dann beispielsweise einer Etikettierstation übergeben werden. Entsprechende Vorrichtungen sind auch zum Behandeln von Glasbehältnissen, (Metall-)Dosen oder auch Verbundkartonverpackungen bekannt.

Dabei werden in Abfüllanlagen die Transporteinrichtungen üblicherweise behältnis- bzw. flaschenspezifsch ausgelegt. Falls nunmehr ein Betreiber einer Abfüllanlage ein anderes Behältnis, insbesondere mit anderen Abmessungen hinsichtlich des Durchmessers oder in der Höhe, in seiner Maschine verarbeiten möchte, benötigt er hierfür zusätzliche Transporteinrichtungen, wie Transportsterne, die wieder nur speziell für diese Behältnisse funktionieren. Dies führt zu höheren Anschaffungskosten und Rüstzeiten und daneben wird auch Lagerplatz für die Behälterrüstteile verschwendet.

Aus der DE 26 23 309 ist eine Vorrichtung zur Führung von zylindrischen Behältern bekannt. Diese Vorrichtung ist dabei an unterschiedliche Behälterdurchmesser anpassbar. Die DE 601 14 777 T2 beschreibt eine Vorrichtung zur Übergabe von Behältern mit einem Führungsrad variabler Geometrie. Dabei werden die Behälter auf eine kreisbogenförmigen Umlaufbahn um eine zentrale Achse gefördert und eine Anpassung unterschiedlicher Behältnisdurchmesser kann durch Verstellung zweier übereinander liegender konzentrischer Platten erfolgen.

Eine Vorrichtung gemäß dem Oberbegriff des Anspruchs 1 ist aus der JP 2007 186271 A bekannt.

Der vorliegenden Erfindung liegt die Aufgabe zu Grunde, eine Vorrichtung zum Transportieren von Behältnissen zu schaffen, welche eine verbesserte Anpassfähigkeit an unterschiedliche Behältnisse bzw. Behältnisse mit unterschiedlichen Abmessungen erlaubt. Dies wird erfindungsgemäß durch eine Vorrichtung nach Anspruch 1 erreicht. Vorteilhafte Ausführungsformen und Weiterbildungen sind Gegenstand der Unteransprüche.

Eine erfindungsgemäße Vorrichtung zum Transportieren von Behältnissen weist ein erstes um eine vorgegebene Drehachse drehbares Transportrad auf, welches die Behältnisse an einer Seitenwandung kontaktiert, um die Behältnisse zu transportieren. Dabei weist dieses Transportrad eine Vielzahl von ersten Aufnahmebereichen bzw. Aufnahmeausnehmungen zur (teilweisen) Aufnahme von ersten Bereichen der Behältnisse auf. Daneben weist die Vorrichtung ein zweites Transportrad auf, welches ebenfalls um die Drehachse drehbar ist und welches gegenüber dem ersten Transportrad in Richtung dieser Drehachse versetzt ist und welches sich gemeinsam mit dem ersten Transportrad dreht. Dieses zweite Transportrad weist eine Vielzahl von zweiten Aufnahmebereichen bzw. Aufnahmeausnehmungen zur Aufnahme von zweiten Bereichen der Behältnisse auf, wobei die ersten Bereiche der Behältnisse von den zweiten Bereichen der Behältnisse in einer Längsrichtung der Behältnisse beabstandet sind.

Weiterhin ist ein Verstellmechanismus zum Verändern der ersten Aufnahmebereiche und insbesondere zum Verändern der Größen der besagten ersten Aufnahmebereiche vorgesehen.

Erfindungsgemäß ist der Verstellmechanismus derart ausgebildet, dass die Position wenigstens eines ersten Aufnahmebereichs gegenüber der Position eines zweiten Aufnahmebereichs in der Umfangsrichtung der Transporträder unabhängig von einer mit dem Verstellmechanismus eingestellten Größe des ersten Aufnahmebereichs ist. Mit anderen Worten bleibt eine Ausrichtung der ersten Aufnahmebereiche gegenüber den zweiten Aufnahmebereichen - insbesondere in der Umfangsrichtung der Transporträder, bevorzugt aber auch in einer radialen Richtung der Transporträder - unabhängig von einer Einstellung des Verstellmechanismus erhalten.

Die zweiten Aufnahmebereiche sind dabei vorteilhaft in Form von Ausnehmungen an dem zweiten Transportrad, genauer, einem Außenumfang des zweiten Transportrades ausgebildet und die ersten Aufnahmebereiche sind dabei vorteilhaft in Form (in ihrer Größer veränderlichen) Ausnehmungen an dem ersten Transportrad, genauer gesagt, einem Außenumfang des ersten Transportrads ausgebildet. Dabei sind besonders bevorzugt die Aufnahmebereiche jeweils äquidistant in den Umfangsrichtungen der jeweiligen Transporträder zueinander angeordnet.

Es wird daher erfindungsgemäß vorgeschlagen, dass nicht nur die Aufnahmebereiche hinsichtlich ihrer Größe einstellbar und damit auf unterschiedliche Außenquerschnitte der Behältnisse anpassbar sind, sondern dass sich auch die Relativposition dieser Aufnahmebereiche, insbesondere die Position eines (fiktiven) Mittelpunkts unabhängig von der eingestellten Größe der Aufnahmebereiche nicht ändert. Auf diese Weise wird erreicht, dass unterschiedliche Behältnisquerschnitte aufnehmbar sind, ohne dass sich hierdurch die Position einer Behältnishalsaufnahme gegenüber der Position einer Behältniskörperaufnahme ändert.

Vorteilhaft liegt eine geometrische Mitte bzw. ein geometrischer Mittelpunkt der zweiten Aufnahmebereiche in Richtung der Drehachse unabhängig von der Einstellung des Verstellmechanismus stets im Wesentlichen genau oberhalb einer geometrischen Mitte bzw. einem geometrischen Mittelpunkt der jeweiligen ersten Aufnahmebereiche. Auf diese Weise wird gewährleistet, dass unabhängig von der jeweils eingestellten Größe der Aufnahmebereiche das Behältnis stets gerade stehend in der Transporteinrichtung transportiert wird. Vorteilhaft ist der Aufnahmebereich auch derart ausgebildet, dass sich in Abhängigkeit der durch den Verstellmechanismus gewählten Größe des Aufnahmebereichs der besagte geometrische Mittelpunkt des so transportierten Behältnisses auch in der radialen Richtung des zweiten Transportrades nicht verschiebt.

Vorteilhaft ist daher eine Drehposition des zweiten Transportrades gegenüber seiner Trägerwelle fest. Daher wird das zweite Transportrad bei einer Umstellung der Aufnahmebereiche selbst nicht hinsichtlich seiner Drehstellung angepasst, sondern es wird lediglich die Größe der Aufnahmebereiche verändert, nicht jedoch deren Position in Umfangsrichtung relativ zu dem zweiten Transportrad. So kann beispielsweise eine Welle oder Spindel vorgesehen sein, der gegenüber das zweite Transportrad zwar ggfs. höhenverstellbar, jedoch drehfest angeordnet ist.

Es wäre weiterhin jedoch auch möglich, dass der besagte Verstellmechanismus so ausgeführt ist, dass sich bei einer Verstellung der ersten Aufnahmebereiche auch eine Relativposition des zweiten Transportrades in Umfangsrichtung derart ändert, dass sichergestellt bleibt, dass die Behältnisse stets senkrecht stehend transportiert werden d.h. eine Ausrichtung der Aufnahmebereiche erhalten bleibt.

Durch die Veränderung der Aufnahmebereiche können diese auf unterschiedliche Behältnisquerschnitte angepasst werden.

Vorzugsweise sind die ersten Aufnahmebereiche auf unterschiedliche Behältnisquerschnitte anpassbar und ein Abstand zwischen dem ersten Transportrad und dem zweiten Transportrad ist in Richtung der Drehachse veränderbar.

Es wird daher hier vorgeschlagen, dass derartige Transporteinrichtungen nicht nur eine Anpassung an unterschiedliche Behälterquerschnitte erlauben, sondern darüber hinaus auch Anpassungen an unterschiedliche Behältnishöhen, wobei beispielsweise die besagten zweiten Aufnahmebereiche jeweils einen Halsbereich des Behältnisses aufnehmen können.

Vorzugsweise sind die ersten Aufnahmebereiche an einem Außenumfang des Transportrades angeordnet und besonders bevorzugt sind diese ersten Aufnahmebereiche gleichmäßig über den Außenumfang des ersten Transportrades verteilt.

Vorzugsweise sind auch die zweiten Aufnahmebereiche ― insbesondere auch unabhängig von einer eingestellten Größe der Aufnahmebereiche ― in Richtung der Drehachse direkt oberhalb der ersten Aufnahmebereichen angeordnet und vorzugsweise entspricht die Anzahl der zweiten Aufnahmebereichen der Anzahl der ersten Aufnahmebereiche.

Bei einer weiteren vorteilhaften Ausführungsform weisen die zweiten Aufnahmebereiche geringere Aufnahmequerschnitte auf als die ersten Aufnahmebereiche und dienen insbesondere zur Aufnahme von Halsbereichen der Behältnisse.

Vorzugsweise ist der Abstand zwischen den beiden Transporträdern stufenlos einstellbar. Vorteilhaft ist auch die Größe des besagten Aufnahmebereiches stufenlos einstellbar.

Es wird daher eine Transporteinrichtung, wie ein Transportstern, zur Verfügung gestellt, der stufenlos für unterschiedliche Flaschendurchmesser und -höhen verstellbar ist. Dabei ist das erste Transportrad, das im Folgenden auch als Rumpfstern bezeichnet wird, verstellbar für unterschiedliche Flaschendurchmesser ausgebildet.

Vorzugsweise weist die Vorrichtung einen Stützbereich zum Abstützen eines Bodens der Behältnisse während dem Transport auf. Dabei kann es sich um einen Boden handeln, der sich mit den Transporträdern mitbewegt, es wäre jedoch auch ein Boden denkbar, der selbst stationär angeordnet ist und gegenüber dem die besagten Behältnissen gleiten.

Bei einer weiteren vorteilhaften Ausführungsform ist das zweite Transportrad abnehmbar an einer Antriebswelle angeordnet. Insbesondere handelt es sich dabei um eine Antriebswelle, weiche die beiden Transporträder- insbesondere synchron - antreibt.

Bei einer weiteren vorteilhaften Ausführungsform weist das zweite Transportrad an seinem Außenumfang die doppelte Anzahl an Aufnahmebereichen auf wie das erste Transportrad, wobei die Aufnahmebereiche wechselweise unterschiedliche Abmessungen, insbesondere Durchmesser aufweisen, und wobei jeweils nur jeder zweite Aufnahmebereich des zweiten Transportrades mit den Aufnahmebereichen des ersten Transportrades fluchtet. Dadurch können mit ein und demselben zweiten Transportrad durch geringen Umrüstaufwand beispielsweise zwei unterschiedliche Flaschenhalsdurchmesser aufgenommen werden.

Bei dem zweiten Transportrad handelt es sich insbesondere um einen Halsstern, der ― wie oben erwähnt - in der Höhe verstellbar und bevorzugt auch schnell wechselbar ist. Die beiden Transporträder sind dabei vorteilhaft auf vorhandene Sternaufnahmen montierbar. Auf diese Weise ist auch eine Nachrüstung vorhandener Maschinen möglich. Da die erfindungsgemäße Vorrichtung nur relativ wenig bewegliche Teile aufweist, ergibt sich ein geringer Montage- und Wartungsaufwand. Gegenüber aus dem Stand der Technik bekannten Vorrichtungen müssen bei einem Wechsel der Behältnissorte die Transporteinrichtungen nicht mehr gewechselt, sondern können lediglich verstellt werden. Auf diese Weise können Betreiber einer Abfüllanlage mit einer Baugruppe mehrere Behältnissorten verarbeiten. Auf diese Weise reduzieren sich die Anschaffungskosten und es sind nun auch geringere Rüstzeiten möglich.

Erfindungsgemäß weist die Vorrichtung einen gegenüber dem ersten Transportrad bewegbaren Verstellkörper auf, um die Größen aller Aufnahmebereiche zu ändern. Genauer kann dieser Verstellkörper gegenüber dem ersten Transportrad verschoben werden, sodass sich beispielsweise ein Querschnitt der Aufnahmebereiche verändert.

Bei einer weiteren vorteilhaften Ausführungsform weist die Vorrichtung ein drittes Transportrad auf, welches Aufnahmebereiche zur Aufnahme der Behältnisse aufweist und diese Aufnahmebereiche sind in Richtung der Drehachse im Wesentlichen deckungsgleich zu den ersten Aufnahmebereichen angeordnet. Dieses dritte Transportrad dient dabei zur Abstützung, sodass bei einer Verstellung des Verstellkörpers der Querschnitt verändert wird, jedoch die Behältnisse nach wie vor stabil durch das erste Transportrad gestützt werden.

Erfindungsgemäß ist auch der Verstellkörper als ein um die Drehachse drehbares Rad ausgeführt. Durch eine Drehung dieses Rades können auf diese Weise sämtliche Aufnahmebereiche gleichzeitig verändert werden.

Bei einer weiteren vorteilhaften Ausführungsform weist die Vorrichtung einen Verstellmechanismus auf, um sämtliche ersten Aufnahmebereiche zeitgleich hinsichtlich ihrer Größe zu verändern. Dabei kann beispielsweise dieser Verstellmechanismus an einen Punkt oder an einem Bereich des Verstellkörpers und des Transportrades angreifen, um die entsprechende Verstellung für alle Aufnahmebereiche zu bewirken.

Bei einer weiteren vorteilhaften Ausführungsform ist der Verstellmechanismus ein Element bzw. weist der Verstellmechanismus wenigstens ein Element auf, dem gegenüber sowohl das erste Transportrad, als auch der Verstellkörper beweglich angeordnet sind. So ist es beispielsweise möglich, dass der Verstellmechanismus an einem Träger angeordnet ist und durch eine Verstellung sowohl das erste Transportrad als auch der Verstellkörper bewegt werden.

Bei einer weiteren vorteilhaften Ausführungsform ist der Verstellmechanismus an einem mit einer Antriebswelle gekoppelten Träger angeordnet. Dabei ist es möglich, dass dieser Träger fest mit der Antriebswelle gekoppelt ist und sich damit im Arbeitsbetrieb mit dieser Antriebswelle dreht. Im Arbeitsbetrieb können durch entsprechende Arretierelemente das erste Transportrad und bevorzugt auch der Verstellkörper sowie besonders bevorzugt auch das dritte Transportrad mit diesem Träger und damit mittelbar mit der Antriebswelle gekoppelt werden.

Erfindungsgemäß weist der Verstellmechanismus ein erstes Verstellelement auf, welches mit dem ersten Transportrad gekoppelt ist, sowie ein zweites Verstellelement, welches mit dem Verstellkörper gekoppelt ist und diese Verstellelemente sind relativ zueinander beweglich, wobei die Bewegung des ersten Verstellelementes und die Bewegung des zweiten Verstellelementes miteinander gekoppelt sind. Auf diese Weise kann erreicht werden, dass ein Verstellelement bewegt wird und diese Bewegung auch eine Bewegung des anderen Verstellelementes nach sich zieht, um auf diese Weise den Verstellkörper zu bewegen und um auf diese Weise auch die Aufnahmebereiche zu verändern.

Vorteilhaft sind dabei das erste Verstellelement und das zweite Verstellelement miteinander verzahnt. Durch diese Verzahnung kann eine genauere produzierbare Änderung sämtlicher Aufnahmebereiche erreicht werden.

Erfindungsgemäß sind das erste Verstellelement und das zweite Verstellelement jeweils um eine vorgegebene Schwenkachse schwenkbar. Auf diese Weise kann eine Art Zangenbewegung erreicht werden, welche wiederum die Bewegung des Verstellkörpers bewirkt. Vorteilhaft ist der Verstellkörper gegenüber dem ersten Transportrad und bevorzugt auch gegenüber einem Träger, an dem der Verstellmechanismus angeordnet ist, arretierbar. Dies bedeutet, dass bestimmte Aufnahmebereiche bzw. deren Größen festlegbar und in einer bestimmten Größe arretierbar sind.

Vorzugsweise wird der Abstand des zweiten Transportrades zum ersten Transportrad entlang der Drehachse durch einen Spindelmechanismus stufenlos eingestellt. Vorteilhaft ist dabei auch der besagte Abstand und damit die Höhenposition des zweiten Transportrades arretierbar.

Weitere Vorteile und Ausführungsformen ergeben sich aus den beigefügten Zeichnungen:
Darin zeigen:
   - Fig. 1: eine Darstellung einer erfindungsgemäßen Transporteinrichtung für Behältnisse;
   - Fig. 2: eine Detaildarstellung des Verstellmechanismus;
   - Fig. 3: eine Detaildarstellung des Verstellmechanismus;
   - Fig. 4: eine Detaildarstellung des höhenverstellbaren zweiten Transportrades;
   - Fig. 5: eine Darstellung der Vorrichtung bei maximalem Aufnahmebereich; und
   - Fig. 6: eine Darstellung der Vorrichtung bei minimalem Aufnahmebereich.

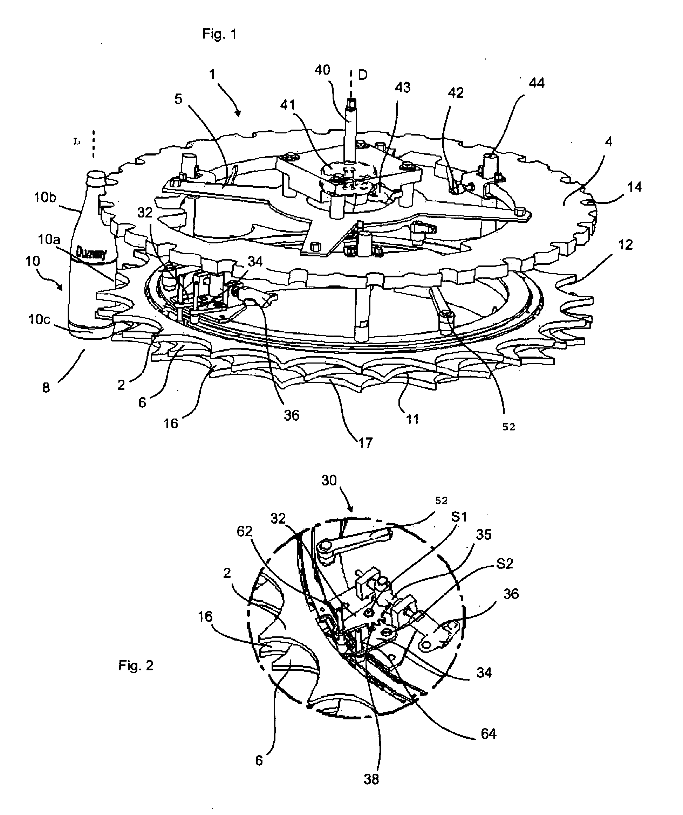

   Figur 1 zeigt eine teilweise Darstellung einer Transporteinrichtung 1 zum Transportieren von Behältnissen 10. Dabei weist diese Transporteinrichtung ein erstes Transportrad 2 auf, welches an seinem Außenumfang eine Vielzahl von Aufnahmebereichen 12 aufweist, die jeweils zum Aufnehmen von den Behältnissen 10, genauer gesagt zum teilweisen Aufnehmen der Grundkörper bzw. der Seitenwandungen 10a dienen. Durch eine entsprechende Drehbewegung des Transportrades 2 können damit auch die Behältnisse 10 entlang einer kreisförmigen Bahn transportiert werden. Damit sind die Aufnahmebereiche auch Führungsbereiche.

Die Transporteinrichtung 1 kann als Teil einer (nicht gezeigten) Behälterbehandlungsanlage dienen, wobei auch mehrere Transporteinrichtungen hintereinander liegen können, wodurch ein schlangenförmiger Transportpfad, beispielsweise zwischen zwei Behälterbehandlungsmaschinen wie beispielsweise Behälterrinser und Behälterabfüllmaschine, gebildet wird. Die Transporteinrichtung 1 ist dazu beispielsweise auf einer (nicht gezeigten) Sternsäule mit Hilfe einer Sternklemmung drehbar befestigt angeordnet, wobei in der Sternsäule jeweils ein Antrieb für die Transporteinrichtung 1 angeordnet sein kann.

Das Bezugszeichen 4 kennzeichnet ein zweites Transportrad, das bezüglich des ersten Transportrads 2 in der Höhe bzw. entlang der Drehachse D versetzt ist. Auch dieses zweite Transportrad 4 weist dabei eine Vielzahl von zweiten Aufnahmebereichen 14 auf, die jeweils zur Aufnahme eines Halsbereiches 10b des Behältnisses 10 dienen. Das Bezugszeichen 8 kennzeichnet (nur schematisch dargestellt) einen Boden, der zum Tragen des Behältnisses 10, genauer gesagt zur Abstützung des Behältnisses über dessen Bodenfläche 10c dient.

Das Bezugszeichen 40 kennzeichnet eine Spindel, die zur Höhenverstellung des zweiten Transportrades 4 dient. Zu diesem Zweck ist eine Verstellscheibe 41 mit einem Griff 43 vorgesehen, in welche die Spindel 40 eingreift, sodass durch eine Drehung der Spindel 40 eine Höhenverstellung erreicht werden kann. Das zweite Transportrad 4 ist dabei mit einer Vielzahl von Trägern 5 befestigt.

Das Bezugszeichen 16 kennzeichnet ein drittes Transportrad, welches hier unterhalb des Transportrads 2 angeordnet ist und dessen Aufnahmebereiche 17 deckungsgleich mit den ersten Aufnahmebereichen 12 des ersten Transportrades 2 sind. Zwischen dem ersten Transportrad 2 und dem dritten Transportrad 16 ist ein Verstellkörper 6 in Form eines weiteren verstellbaren Rades angeordnet. Dieser Verstellkörper 6 weist dabei ebenfalls Ausnehmungen 11 auf, die in diesem Ausführungsbeispiel hinsichtlich ihres Durchmessers den ersten Aufnahmebereichen 12 entsprechen. Durch eine Relativdrehung des Verstellkörpers 6 gegenüber den Transporträdern 2 und 16 können die resultierenden Aufnahmebereiche hinsichtlich ihrer Größe und damit der aufnehmbare Behältnisquerschnitt verändert werden.

Damit besteht hier die Rumpfführung bzw. der Rumpfstern aus 3 Sternplatten mit - in diesem Ausführungsbeispiel - prismenförmigen Sterntaschen von denen das obere Transportrad 2 und das untere Transportrad 16 das Behältnis 10 in Drehrichtung anschieben und das Verstellrad 6 als Gegenhalter dient. Durch Drehung einer Verstelleinrichtung 36 können der Verstellkörper 6 und die Transporträder 2, 16 gegeneinander bewegt werden.

Da die Baugruppe durch Lösen der Schrauben einfach demontiert werden kann, ist eine schnelle und kostengünstige Erneuerung von Verschleißteilen wie beispielsweise den Transporträdern sowie auch eine Reinigung der kompletten Baugruppe möglich.

Wie erwähnt, ist eine Höhenverstellung des zweiten Transportrades 4 über die an der Sternklemmung montierte Gewindespindel stufenlos möglich. Nach erfolgter Verstellung kann das Transportrad 4 über drei Klemmhebel 42, die hier in Umfangsrichtung gleichmäßig verteilt sind, an Mitnehmerbolzen 44 geklemmt werden, um auf diese Weise die Arretierung zu erreichen.

Zum Wechseln des zweiten Transportrades 4 müssen lediglich die besagten Klemmhebel 42 und der Griff 43, der an der Verstellscheibe 41 der Gewindespindel 40 montiert ist, gelockert werden und dann kann das komplette Transportrad 4 entfernt werden.

Figur 2 zeigt eine Teildarstellung des Verstellmechanismus zum Verstellen der Aufnahmebereiche 12. Dabei sind hierbei zwei Verstellelemente 32 und 34 vorgesehen, die bezüglich zweier Schwenkachsen S1 und S2 schwenkbar sind. Diese Verstellelemente 32 und 34 sind wiederum mittels Bolzen 62 und 64 an einerseits die Transporträder 2, 16 und andererseits den Verstellkörper 6 gekoppelt. Durch Drehung einer Verstelleinrichtung 36 können über eine Gewindespindel 35 die beiden Verstellelemente auf Grund einer Verzahnung 38 scherenförmig stufenlos zueinander bewegt werden.

Diese Bewegung wird anschließend auf die Transporträder 2 und den Verstellkörper 6 übertragen. Auf diese Weise bewegt das Verstellelement 32 das erste Transportrad 2 und das dritte Transportrad 16 gleichförmig und das Verstellelement 34 die mittlere Sternplatte bzw. den Verstellkörper 6. Die Verstellung erfolgt hierbei entgegengesetzt.

Durch die Verzahnung 38 wird erreicht, dass die besagte Verstellung gleichmäßig erfolgt und daher das Behältnis immer in einer gewünschten Position verbleibt und daher auch die Teilung zwischen den einzelnen Aufnahmebereichen erhalten bleibt. Dies wird unten genauer erläutert.

Durch ein Verdrehen der Klemmgriffe 52 können die einzelnen Transporträder 2, 6 und 16 miteinander sandwichartig verklemmt werden. Auf diese Weise kann verhindert werden, dass ein durch das Anschieben der Behältnisse entstehendes Drehmoment den Verstellmechanismus 30 belastet und dieser dadurch frühzeitig verschleißt.

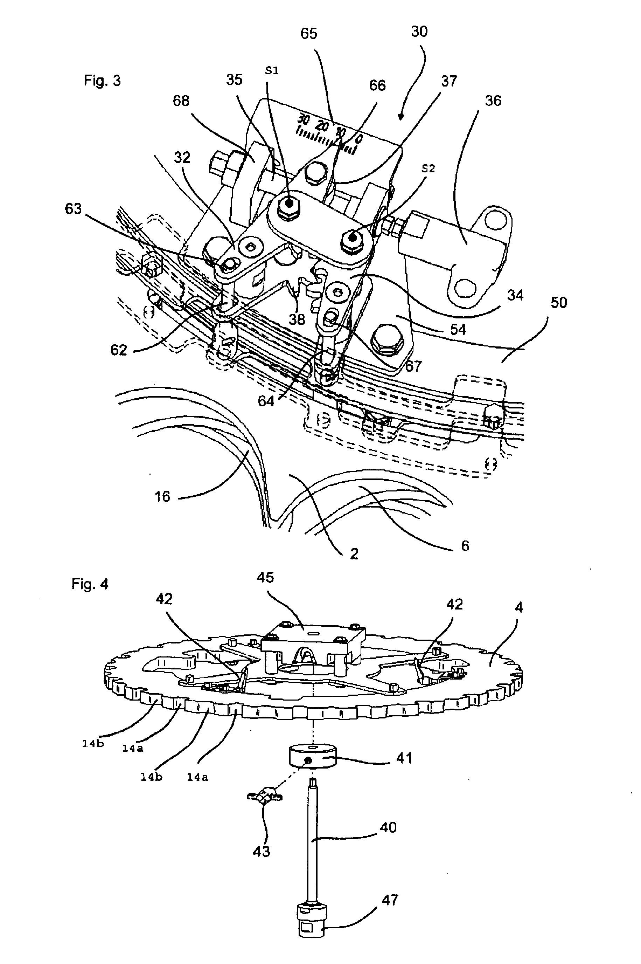

Fig. 3 zeigt eine Detaildarstellung des in seiner Gesamtheit mit 30 bezeichneten Verstellmechanismus. Dabei dreht sich mit dem Verstellelement 36 auch eine Spindel 35 und durch diese Drehung wird ein Endabschnitt 37 des ersten Verstellelements 32 um die erste Schwenkachse S1 bewegt.

Gleichzeitig wird eine Spitze 66 gegenüber einer Skala 65 bewegt, sodass eine Einstellung des Aufnahmebereichs ablesbar ist. Durch die Verzahnung 38 ist die Bewegung des ersten Verstellelements 32 an eine Bewegung des zweiten Verstellelements 34 gekoppelt, sodass auch dieses um die zweite Schwenkachse S2 bewegt wird.

Genauer gesagt werden die beiden Verstellelemente 34 und 32 mit gleicher Winkelgeschwindigkeit gegenüber den Schwenkachsen S1 und S2 bewegt. Der gesamte Verstellmechanismus 30 ist dabei über eine Platte 54 fest an einem in seiner Gesamtheit mit 50 bezeichneten Träger angeordnet. Durch die Verstellung werden damit das erste Transportrad 2 und das dritte Transportrad 16 einerseits und der Verstellkörper 6 andererseits mit gleicher Umfangsgeschwindigkeit bezüglich der Drehachse D (jedoch in entgegen gesetzter Richtung) bewegt. Genauer gesagt wird durch Drehung des Verstellgriffes 36 an der Gewindespindel 35 die eingeleitete Drehbewegung über die Spindelmutter bzw. den Endabschnitt 37 in eine lineare Bewegung umgewandelt.

Die lineare Bewegung wird durch die an der Spindelmutter verschraubten Verstellelemente 32, 34, welche über die Verzahnung 38 gekoppelt sind, in eine scherenförmige Drehbewegung umgewandelt. Diese Bewegung wird mit den beiden Führungsbolzen 62 und 64, welche in die beiden Langlöcher 63 und 67 der Verstellelemente 32 und 34 eingreifen, einerseits auf die obere und untere Sternplatte (bzw. das erste und dritte Transportrad 2, 16) und andererseits auf den Verstellkörper bzw. die mittlere Sternplatte 6 übertragen. Anstelle des hier gezeigten Verstellgriffes wäre es auch möglich, einen Antrieb, wie beispielsweise einen Servomotor oder dergleichen einzusetzen. Mit der Mechanik sind jedoch verschiedene Übersetzungsverhältnisse möglich. Das Bezugszeichen 68 kennzeichnet einen Träger zum Tragen der Spindel 35.

Fig. 4 zeigt eine Darstellung des zweiten Transportrades 4 bzw. dessen Höhenverstellung. Das zweite Transportrad 4, d. h. der Halsstern liegt mit seiner Unterseite auf einer Verstellmutter 41 auf. Das Bezugszeichen 43 kennzeichnet einen Klemmgriff um das zweite Transportrad 4 an der Verstellmutter 41 lösbar zu fixieren. Durch Drehen der Gewindespindel 40 wird damit über die Verstellmutter 41 eine Höhenverstellung des Halssterns 4 bewirkt. Durch Lockerung der Klemmhebel 42 ist es möglich, das zweite Transportrad bzw. des Halsstern 4 zu demontieren. Genauer gesagt, lässt sich auf diese Weise die Halteplatte 45 mit dem Transportrad 4 nach oben von der Gewindespindel 40 abziehen. Die Verstellmutter 41 verbleibt dabei auf der Spindel 40. Das Bezugszeichen 47 bezieht sich auf eine Lagerung für die Gewindespindel 40.

Wie in Figur 4 gezeigt weist hier der zweite Transportstern 4 wechselweise Aufnahmebereiche '14a und 14b auf, die unterschiedliche Abmessungen aufweisen. Nach der oben beschriebenen Demontage des zweiten Transportsterns 4 von der Gewindespindel 40 kann nun der zweite Transportstern 4 um eine halbe Teilung versetzt wieder auf die Spindel 40 aufgesetzt und durch den Klemmgriff 43 an der Verstellmutter 41 befestigt werden. Dadurch kann ein Wechsel derjenigen Aufnahmebereiche 14a und 14b erfolgen, die exakt über den Aufnahmebereichen 12 des ersten Transportsterns 2 angeordnet sind und einen Behältnishals in Eingriff nehmen. Eine Bevorratung eines zweiten Garniturensatzes für einen zweiten zu bearbeitenden Behältnishalsdurchmesser ist damit nicht erforderlich.

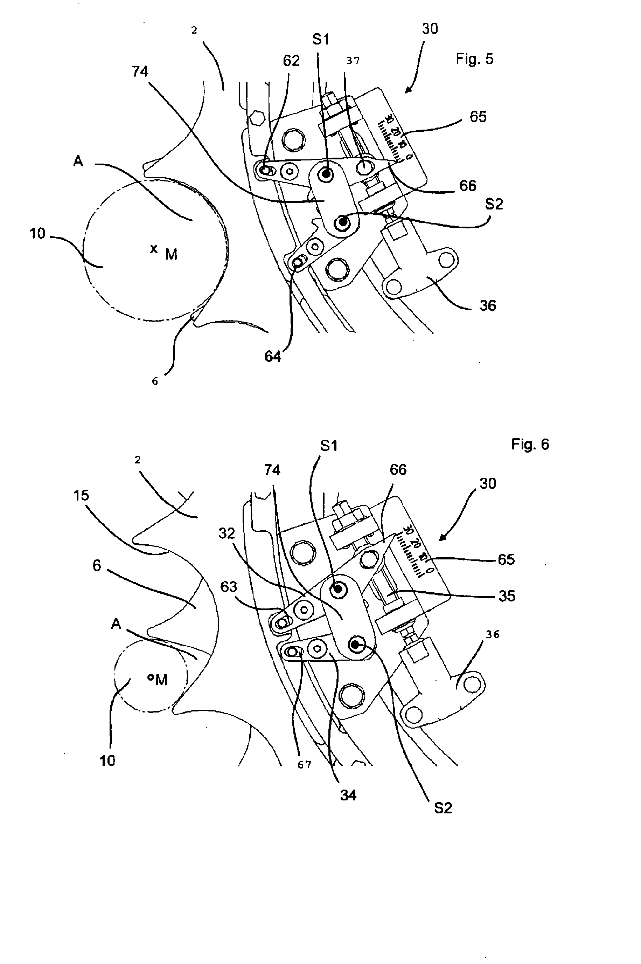

Die Fig. 5 und 6 zeigen zwei unterschiedliche Einstellungen des Verstellmechanismus 30, genauer gesagt eine erste Einstellung, in der die Aufnahme von Behältnissen 10 mit großem Querschnitt möglich ist und eine Einstellung (Fig. 6) bei der die Aufnahme von Behältnissen mit geringerem Querschnitt möglich ist. Man erkennt, dass in Fig. 5 die beiden Bolzen 62 und 64 den maximalen Abstand zueinander aufweisen und in dieser Einstellung das erste Transportrad 2 im Wesentlichen deckungsgleich mit dem darunter liegenden Verstellkörper 6 ist. Auf diese Weise entsteht hier ein maximaler Aufnahmebereich A, in dem die Behältnisse 10 aufgenommen werden können.

Falls nun über die Gewindespindel 35 die beiden Verstellelemente 32 und 34 um ihre jeweiligen Schwenkachsen S1 und S2 geschwenkt werden, werden auch die beiden Bolzen 62 und 64 mit gleicher Geschwindigkeit (bedingt durch die Verzahnung) aufeinander zubewegt. Der Abstand der beiden Schwenkachsen S1 und S2 ändert sich nicht. Das Bezugszeichen 74 bezieht sich auf ein Halteelement.

Entsprechend bewegt sich das erste Transportrad 2 um einen vorbestimmten Umfangswinkel entgegen dem Uhrzeigersinn und der Verstellkörper 6 bewegt sich um den gleichen Umfangswinkel im Uhrzeigersinn. Auf diese Weise wird der Aufnahmebereich A verändert und ist nunmehr zur Aufnahme von Behältnissen 10 mit kleinerem Querschnitt geeignet. Durch die Ausgestaltung der jeweiligen Oberflächen 15 der Aufnahmebereiche bzw. der Aufnahmeausnehmungen A wird erreicht, dass der Abstand des Behältnisses 10 bzw. einer Mittel-oder Längsachse M des Behältnisses 10 zu beispielsweise den beiden Schwenkachsen S1 und S2 unabhängig von einer Stellung der Verstellelemente 32 und 34 konstant bleibt. Die Mittelachse M des Behältnisses 10 verläuft dabei in Längsrichtung L des Behältnisses 10.

Auch bleibt die Position der besagten Achse M in einer Umfangsrichtung der beiden Transporträder 2 und 16 sowie des Verstellkörpers 6 konstant, sodass sich insgesamt die Relativposition der Achse M in Umfangsrichtung des Transportrads 2 nicht ändert. Dies ist auch vorteilhaft, da sich andererseits auch die Position der Aufnahmebereiche 14 (nicht gezeigt) des zweiten Transportrades 4 während dieser Verstellung nicht ändert. In einer Draufsicht entlang der Drehachse D bleiben daher die jeweiligen Aufnahmebereiche 12 und 14 stets genau übereinander, wobei jedoch die Größe der Aufnahmebereiche 14 geringer ist, als die der Aufnahmebereiche 12. Auf diese Weise wird erreicht, dass das Behältnis stets genau gerade stehend transportiert werden kann.

Durch eine Verstellung des Verstellmechanismus 30 wird daher insbesondere auch ein Radius des Transportpfades der transportierten Behältnisse nicht verändert. Dies ist deshalb vorteilhaft, da auf diese Weise die Behältnisse ohne wesentliche Einstellungen an sich anschließende Transporteinrichtungen übergeben (oder von vorausgehenden Transporteinrichtungen übernommen) werden können. Die hier beschriebene Vorrichtung ist insbesondere zum Transportieren von Behältnissen mit kreisrundem Grundkörperquerschnitt geeignet. Da sich die Abstände der Mittelachsen M von der Drehachse D der Transporteinrichtung 1 bei unterschiedlichen Behältnisdurchmessern nicht ändern, ergibt sich, dass gegebenenfalls vorhandene Behältnisaußenführungen austauschbar und/oder einstellbar sein müssen. Durch diese Außenführungen werden die Behältnisse auf ihrem kurvenförmigen Transportpfad in den Aufnahmeausnehmungen gehalten.

Der manuell verstellbare Verstellmechanismus 30 des Ausführungsbeispiels kann durch Einsatz von insbesondere Linearservomotoren oder ähnlichen Stellantrieben auch automatisch verstellbar sein.

### Bezugszeichenliste

- 1: Transporteinrichtung
- 2: Transportrad, Sternplatte
- 4: zweites Transportrad, Halsstern
- 5: Träger
- 6: Verstellkörper
- 8: Boden
- 10: Behältnisse
- 10a: Grundkörper
- 10b: Halsbereich
- 10c: Bodenfläche
- 12: Aufnahmebereiche
- 14: Aufnahmebereiche
- 15: Oberfläche
- 16: drittes Transportrad, Sternplatte
- 30: Verstellmechanismus
- 32, 34: Verstellelemente
- 35: Spindel
- 36: Verstellelement, Verstellgriff
- 37: Endabschnitt, Spindelmutter
- 38: Verzahnung
- 40: Spindel
- 41: Verstellscheibe, Verstellmutter
- 42: Klemmhebel
- 43: Klemmgriff
- 44: Mitnehmerbolzen
- 45: Halteplatte
- 47: Lagerung
- 50: Träger
- 54: Platte
- 62: Bolzen
- 63, 67: Langloch
- 64: Bolzen
- 65: Langloch
- 66: Spitze
- 68: Träger
- 74: Halteelement
- A: Aufnahmeausnehmung
- D: Drehachse
- M: Mittelachse, Längsachse
- S1: erste Schwenkachse
- S2: zweite Schwenkachse

## Patentansprüche

1. Vorrichtung (1) zum Transportieren von Behältnissen (10), mit einem ersten um eine vorgegebene Drehachse (D) drehbaren Transportrad (2), welches die Behältnisse (10) an einem ersten Bereich (10a) kontaktiert, um diese zu transportieren, wobei dieses Transportrad (2) eine Vielzahl von ersten Aufnahmebereichen (12) zur wenigstens teilweisen Aufnahme der ersten Bereiche (10a) der Behältnisse (10) aufweist und mit einem zweiten Transportrad (4), welches um die Drehachse (D) drehbar ist und welches gegenüber dem ersten Transportrad (2) in Richtung der Drehachse (D) versetzt ist und sich gemeinsam mit dem ersten Transportrad (2) dreht, wobei das zweite Transportrad (4) eine Vielzahl von zweiten Aufnahmebereichen (14) zur Aufnahme von zweiten Bereichen (10b) der Behältnisse aufweist, wobei die ersten Bereiche der Behältnisse (10a) von den zweiten Bereichen (10b) der Behältnisse in einer Längsrichtung (L) der Behältnisse (10) beabstandet sind, und wobei ein Verstellmechanismus (30) zum Verändern der ersten Aufnahmebereiche (12) vorgesehen Ist
und derart ausgebildet ist, dass die Position wenigstens eines ersten Aufnahmebereichs (12) gegenüber der Position eines zweiten Aufnahmebereichs (14) in der Umfangsrichtung des ersten Transportrades (2) unabhängig von einer durch den Verstellmechanismus (30) eingestellten Größe des ersten Aufnahmebereichs (12) ist und die Vorrichtung (1) einen gegenüber dem ersten Transportrad (2) bewegbaren Verstellkörper (6) aufweist, um die Größen aller ersten Aufnahmebereiche (12) zu ändern und als um die Drehachse (D) drehbares Rad (6) ausgeführt ist,
**dadurch gekennzeichnet, dass**
der Verstellmechanismus (30) ein erstes Verstelielement (32) aufweist, welches mit dem ersten Transportrad (2) gekoppelt ist, sowie ein zweites Verstellelement (34), welches mit dem Verstellkörper (6) gekoppelt ist und diese Verstellelemente (32, 34) relativ zueinander beweglich sind, wobei die Bewegung des ersten Verstellelements (32) und die Bewegung des zweiten Verstellelements (34) miteinander gekoppelt sind, wobei das erste Verstellelement (32) und das zweite Verstellelement (34) jeweils um eine vorgegebene Schwenkachse (S1, S2) schwenkbar sind.

2. Vorrichtung (1) nach Anspruch 1,
**dadurch gekennzeichnet, dass**
ein Abstand zwischen dem ersten Transportrad (2) und dem zweiten Transportrad (4) in Richtung der Drehachse (D) veränderbar Ist.

3. Vorrichtung (1) nach wenigstens einem der vorangegangenen Ansprüche,
**dadurch gekennzeichnet, dass**
das zweite Transportrad (4) abnehmbar an einer Antriebswelle angeordnet ist.

4. Vorrichtung (1) nach wenigstens einem der vorangegangenen Ansprüche,
**dadurch gekennzeichnet, dass**
die Vorrichtung (1) ein drittes Transportrad (16) aufweist, welche Aufnahmebereiche (17) zur Aufnahme der Behältnisse (10) aufweist und die Aufnahmebereiche (17) bevorzugt In Richtung der Drehachse (D) im Wesentlichen deckungsgleich zu den ersten Aufnahmebereichen (12) angeordnet sind.

5. Vorrichtung (1) nach Anspruch 1,
**dadurch gekennzeichnet, dass**
der Verstellmechanismus (30) wenigstens ein Element aufweist, dem gegenüber sowohl das erste Transportrad (2), als auch der Verstellkörper (6) beweglich sind.

6. Vorrichtung (1) nach Anspruch 1,
**dadurch gekennzeichnet, dass**
der Verstellmechanismus (30) an einem mit der Antriebswelle gekoppelten Träger angeordnet (50) ist.

## Claims

1. An apparatus (1) for the conveying of containers (10), with a first conveying wheel (2) which is rotatable about a pre-set axis of rotation (D) and which contacts the containers (10) on a first region (10a) in order to convey them, wherein this conveying wheel (2) comprises a plurality of first receiving regions (12) for receiving the first regions (10a) of the containers (10) at least in part, and with a second conveying wheel (4) which is rotatable about the axis of rotation (D) and which is offset with respect to the first conveying wheel (2) in the direction of the axis of rotation (D) and which rotates jointly with the first conveying wheel (2), wherein the second conveying wheel (4) has a plurality of second receiving regions (14) for receiving second regions (10b) of the containers, wherein the first regions of the containers (10a) are arranged at a distance from the second regions (10b) of the containers in a longitudinal direction (L) of the containers (10), and wherein an adjustment mechanism (30) is provided for altering the first receiving regions (12),
and is designed in such a way that the position of at least one first receiving region (12) with respect to the position of a second receiving region (14) in the peripheral direction of the first conveying wheel (2) is independent of a magnitude of the first receiving region (12) set by the adjustment mechanism (30) and the apparatus (1) has an adjustment member (6) movable with respect to the first conveying wheel (2) in order to alter the magnitudes of all the first receiving regions (12) and is designed in the form of a wheel (6) rotatable about the axis of rotation (D), **characterized in that**
the adjustment mechanism (30) has a first adjustment element (32) which is coupled to the first conveying wheel (2), and a second adjustment element (34) which is coupled to the adjustment member (6), and these adjustment elements (32, 34) are movable relative to each other, wherein the movement of the first adjustment element (32) and the movement of the second adjustment element (34) are coupled to each other, wherein the first adjustment element (32) and the second adjustment element (34) are pivotable about a pre-set pivot axis (S1, S2) in each case.

2. An apparatus (1) according to claim 1, **characterized in that** a distance between the first conveying wheel (2) and the second conveying wheel (4) is variable in the direction of the axis of rotation (D).

3. An apparatus (1) according to at least one of the preceding claims, **characterized in that** the second conveying wheel (4) is arranged on a drive shaft in a removable manner.

4. An apparatus (1) according to at least one of the preceding claims, **characterized in that** the apparatus (1) has a third conveying wheel (16) which has receiving regions (17) for receiving the containers (10) and the receiving regions (17) are preferably arranged substantially congruently with the first receiving regions (12) in the direction of the axis of rotation (D).

5. An apparatus (1) according to claim 1, **characterized in that** the adjustment mechanism (30) has at least one element, with respect to which both the first conveying wheel (2) and the adjustment member (6) are movable.

6. An apparatus (1) according to claim 1, **characterized in that** the adjustment mechanism (30) is arranged (50) on a carrier coupled to the drive shaft.

## Revendications

1. Installation (1) pour le transport de récipients (10), avec une première roue de transport (2) rotative autour d'un axe de rotation (D) défini, laquelle entre en contact avec les récipients (10) au niveau d'une première zone (10a) pour convoyer ceux-ci, ladite roue de transport (2) comportant une pluralité de premières zones de réception (12) pour une réception au moins partielle des premières zones (10a) des récipients (10), et avec une deuxième roue de transport (4) rotative autour de l'axe de rotation (D), décalée dans la direction de l'axe de rotation (D) par rapport à la première roue de transport (2) et tournant avec la première roue de transport (2), ladite deuxième roue de transport (4) comportant une pluralité de deuxièmes zones de réception (14) pour la réception de deuxièmes zones (10b) des récipients, les premières zones des récipients (10a) étant espacées des deuxièmes zones (10b) des récipients dans une direction longitudinale (L) des récipients (10), et un mécanisme de réglage (30) étant prévu pour modifier les premières zones de réception (12) et étant réalisé de telle manière que la position d'au moins une première zone de réception (12) par rapport à la position d'une deuxième zone de réception (14) dans la direction périphérique de la première roue de transport (2), soit indépendante d'une grandeur de la première zone de réception (12) réglée par le mécanisme de réglage (30), et que ladite installation (1) présente un corps de réglage (6) mobile par rapport à la première roue de transport (2) pour modifier les grandeurs de toutes les premières zones de réception (12) et réalisé comme roue (6) rotative autour de l'axe de rotation (D),
**caractérisée en ce que**
le mécanisme de réglage (30) présente un premier élément de réglage (32) accouplé à la première roue de transport (2) ainsi qu'un deuxième élément de réglage (34) accouplé au corps de réglage (6), et **en ce que** lesdits éléments de réglage (32, 34) sont mobiles l'un par rapport à l'autre, le déplacement du premier élément de réglage (32) et le déplacement du deuxième élément de réglage (34) étant couplés l'un à l'autre, le premier élément de réglage (32) et le deuxième élément de réglage (34) étant respectivement pivotants autour d'un axe de pivotement (S1, S2) défini.

2. Installation (1) selon la revendication 1,
**caractérisée en ce que**
un espacement entre la première roue de transport (2) et la deuxième roue de transport (4) peut être modifié dans la direction de l'axe de rotation (D).

3. Installation (1) selon au moins une des revendications précédentes,
**caractérisée en ce que**
la deuxième roue de transport (4) est disposée de manière amovible sur un arbre d'entraînement.

4. Installation (1) selon au moins une des revendications précédentes,
**caractérisée en ce que**
ladite installation (1) comporte une troisième roue de transport (16), laquelle présente des zones de réception (17) pour la réception des récipients (10), et **en ce que** les zones de réception (17) sont préférentiellement disposées de manière à recouvrir sensiblement les premières zones de réception (12) dans la direction de l'axe de rotation (D).

5. Installation (1) selon la revendication 1,
**caractérisée en ce que**
le mécanisme de réglage (30) comporte au moins un élément mobile par rapport à la première roue de transport (2) et par rapport au corps de réglage (6)

6. Installation (1) selon la revendication 1,
**caractérisée en ce que**
le mécanisme de réglage (30) est disposé sur un support (50) couplé à l'arbre d'entraînement.
